# FASCICULE DE BREVET EUROPEEN

(11) **EP 1 483 930 B1**
(45) Date de publication et mention de la délivrance du brevet: **28.09.2011**
(21) Numéro de dépôt: 03706803.8
(22) Date de dépôt: 11.03.2003
(51) Int. Cl.: H04W 12/06

(54) **MISE A JOUR D'UN ALGORITHME D'AUTHENTIFICATION DANS UN SYSTEME INFORMATIQUE**
AKTUALISIERUNG EINES AUTHENTIFIZIERUNGSALGORITHMUS IN EINEM INFORMATIONSSYSTEM
METHOD OF UPDATING AN AUTHENTICATION ALGORITHM IN A COMPUTER SYSTEM

(30) Priorité: 11.03.2002 EP 02075996; 07.06.2002 FR 0207168
(43) Date de publication de la demande: 08.12.2004
(73) Titulaire: Gemalto SA, 92190 Meudon (FR); Schlumberger Malco, Inc., Owings Mills, MD 21117 (US)
(72) Inventeur: BEAUDOU, Patrice, F-92800 Puteaux (FR); DUBOIS, Christophe, F-78300 Poissy (FR)
(74) Mandataire: Jacquot, Ludovic R. G.
(86) Numéro de dépôt international: PCT/IB2003/000868
(87) Numéro de publication internationale: WO 2003/077586

(56) Documents cités:
- EP-A- 0 977 451
- EP-A- 1 083 767
- WO-A1-93/07697
- WO-A1-93/07697
- US-A1- 2001 005 683
- US-B1- 6 212 372
- US-B1- 6 212 372

## Description

### Domaine technique

La présente invention se rapporte à la mise à jour d'un algorithme d'authentification dans un système informatique.

L'invention s'applique à tout dispositif de traitement de données stockant un algorithme d'authentification. L'invention s'applique tout particulièrement à la carte à puce.

La carte à puce peut être couplée avec tout système qu'il soit embarqué ou non.

L'invention peut être mise en oeuvre dans tout type de réseau de télécommunication tel que le système de radiocommunication numérique cellulaire de type GSM (Global System for Mobile communication), UMTS (Universal Mobile Telecommunication Service), GPRS (General Packet Radio Service), etc.

L'exemple choisi pour illustrer l'invention sera celui du téléphone mobile couplé à une carte à puce de type SIM (Subscriber Identity Module).

### Etat de la technique

La gestion de l'itinérance (roaming en anglais) d'un utilisateur dans un réseau GSM (Global System for Mobile Communication) nécessite la mise en oeuvre d'une identification spécifique de cet utilisateur.

L'emploi d'un canal radio rend les communications vulnérables aux écoutes et aux utilisations frauduleuses. Le système GSM a donc recours
- à l'authentification de chaque utilisateur (ou abonné) avant de lui autoriser l'accès à un service,
- à l'utilisation d'une identité temporaire,
- au chiffrement (ou cryptage) des communications.

Le système GSM utilise actuellement quatre types de codes associés à l'abonné :
- Le code IMSI (International Mobile Subscriber Identity). Ce code est l'identité internationale d'un abonné. Cette identité est inscrite dans la carte SIM.
- Le code TMSI (Temporary Mobile subscriber Identity) est une identité temporaire attribuée par le réseau à un téléphone mobile et utilisé ensuite pour les transactions sur voie radio ;
- Le code MSISDN est le numéro international de l'abonné mobile conforme au plan E164 de l'UIT (Union Internationale des Télécommunications) et connu de l'abonné ;
- Le code MSRN (Mobile Station Roaming Number) est un numéro attribué temporairement, permettant par un appel téléphonique ordinaire de réaliser l'acheminement vers un commutateur MSC où se trouve l'abonné mobile demandé.

Lors de l'abonnement, une clé Ki est attribuée à l'abonné avec le code IMSI. Ce couple ISMI/Ki est stocké à la fois dans la carte SIM de l'abonné et à l'extérieur de la carte notamment dans un centre d'authentification AuC (Authentication Center en anglais), Un couple est intimement lié à un ou plusieurs algorithmes d'authentification.

Rappelons que le centre d'authentification AuC est un centre d'authentification des abonnés d'un réseau GSM. Rappelons, à titre d'information, qu'une authentification est un processus permettant au réseau de vérifier qu'un abonné est autorisé à utiliser le réseau en contrôlant la présence d'une clé secrète dans la carte SIM.

Ainsi, le document US 6,212,372 « enseigne l'utilisation de deux identifiants différents pour accéder à un même service. Ces identifiants différents pouvant être activés successivement ».

Le document WO 93/07697 « enseigne l'utilisation d'un identifiant et d'un double algorithme d'encryptage ».

Un autre couple peut également être stocké dans une seconde base de données appelée HLR (Home Location Register). Cette base stocke le couple MSISDN/IMSI associé à chaque abonné, constitué par le numéro de l'abonné MSISDN et l'identité invariante IMSI.

Un problème est celui de la mise à jour d'un algorithme stocké dans la carte, et dans tout dispositif de traitement de données stockant des données propres aux utilisateurs (le centre AuC, le registre HLR, la base VLR, etc.) communiquant avec la carte. Une telle mise à jour demande entre autres de modifier l'algorithme d'authentification de chaque couple IMSI/Ki, et des couples MSISDN/Ki, à la fois dans la carte et à l'extérieur de la carte dans le centre AuC, dans le registre VLR, dans la base HLR, etc.

Une solution simpliste peut consister à télécharger le nouvel algorithme dans la carte et à l'extérieur de celle-ci dans le centre AuC, dans le registre VLR, dans la base HLR, etc. Cependant, cette solution pose problème en terme de sécurité ; il n'est pas envisageable de transmettre cet algorithme sur le réseau, d'autant plus lorsque cet algorithme est non propriétaire.

### L'invention

Un but visé est une mise à jour sécurisée d'un algorithme d'authentification.

En vue de la réalisation de ce but, l'invention se rapporte à un procédé de mise à jour d'un algorithme d'authentification dans au moins un dispositif de traitement de données apte à stocker dans une mémoire dudit dispositif une identité d'abonné associée à un algorithme d'authentification, caractérisé en ce qu'il comprend les étapes suivantes :
- Une étape préalable de stockage, dans une mémoire du dispositif, d'un deuxième algorithme d'authentification inactif,
- Une étape de basculement du premier algorithme vers le deuxième algorithme (Algo2) propre à inhiber le premier algorithme et à activer le second.

Ainsi, on voit que les algorithmes d'authentification sont stockés au préalable dans la carte. Ceci évite lors de la mise à jour de faire transiter un algorithme d'authentification pour une mise à jour.

L'invention sera mieux comprise à la lecture de la description qui suit, donnée à titre d'exemple et faite en référence aux dessins annexés.

### Dans les dessins :

La figure 1 est une vue d'un système informatique sur lequel peut s'appliquer l'invention. Sur cette figure apparaît l'état de système informatique avant basculement des comptes.
La figure 2 représente la même vue que la figure 1. Sur cette figure, l'état du système est celui obtenu après basculement des comptes.

### Description détaillée illustrant l'invention.

Pour simplifier la description, les mêmes éléments portent les mêmes références.

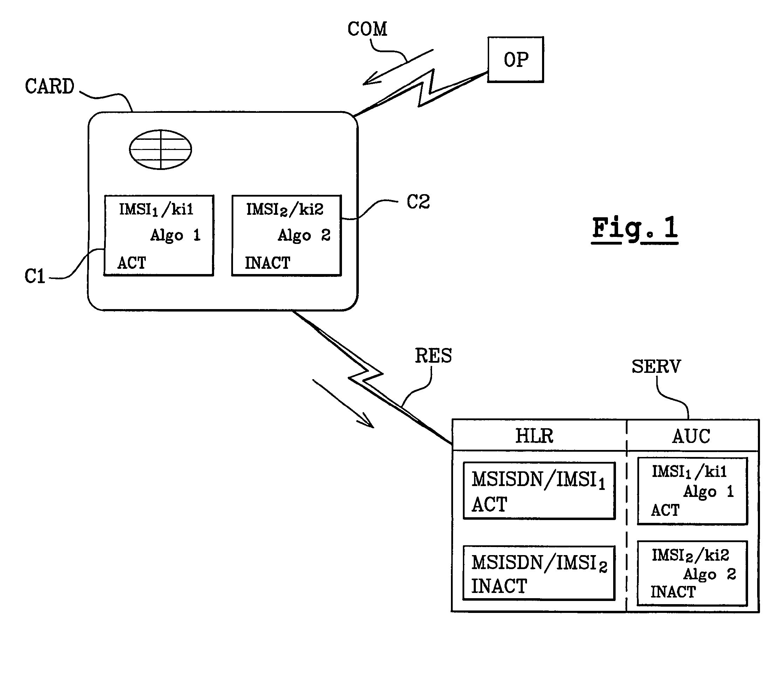

Sur la figure 1, de façon à illustrer l'invention, on a représenté une architecture comprenant un système embarqué tel qu'un téléphone mobile (non représenté) couplé à une carte CARD. Dans notre exemple de réalisation, cette carte est de type SIM.

Dans notre exemple illustré, le système embarqué communique avec un dispositif de traitement de données tel qu'un serveur SERV par l'intermédiaire d'un réseau de télécommunication RES.

Dans notre exemple, un opérateur OP gère les différentes cartes réparties sur le réseau. En particulier, l'opérateur gère les comptes des différents abonnés. En général, lors de la personnalisation de la carte, l'opérateur attribue un couple de données à savoir la clé Ki et le code IMSI associé à au moins un algorithme d'authentification et les charge dans la carte. La carte stocke ainsi un couple IMSI/Ki pour chaque abonné. Ce couple est également stocké dans un centre d'authentification AuC.

De façon à simplifier l'illustration de l'invention, on a choisi d'associer à chaque compte un unique algorithme d'authentification. Cependant, cet exemple n'est pas limitatif ; plusieurs algorithmes d'authentification auraient pu être associés à un même compte abonné.

Dans notre exemple illustré, un autre couple MSISDN/IMSI est stocké dans une base appelée HLR (Home Location Register).

Le centre AuC et la base HLR peuvent se trouver indifféremment sur un même serveur ou sur deux serveurs distincts. Dans notre exemple et en référence à la figure 1, on a choisi de les stocker sur le même serveur SERV.

Comme on l'a vu précédemment, une mise à jour d'un algorithme d'authentification n'est pas simple.

Dans notre exemple de réalisation, le procédé de mise à jour conforme à l'invention nécessite une carte à puce apte à stocker au moins deux comptes C1 et C2. La carte stocke un premier compte C1 d'abonné associé à au moins un premier algorithme d'authentification Algo1(A3A8). Ce premier compte est constitué par le couple IMSI1/Ki1. Dans notre exemple illustré, la carte stocke également un deuxième compte C2 associé au même abonné A1 associé à au moins un second algorithme d'authentification Algo2(A3A8). Ce deuxième compte est constitué par le couple IMSI2/Ki2, L'invention ne se limite pas à l'algorithme d'authentification A3A8 connu de l'homme du métier mais peut s'appliquer indifféremment à tout type d'algorithme d'authentification.

Dans la suite de la description, chaque compte C1 et C2 sera identifié par son code IMSI1 et IMSI2 respectif.

Dans notre exemple de réalisation, les comptes IMSI1 et IMSI2 sont gérés par le même opérateur OP. Selon un autre mode de réalisation, les comptes sur la carte peuvent être gérés par des opérateurs différents.

De la même façon, dans notre exemple, le centre AuC stocke le compte IMSI1 associé au premier algorithme Algo1 (A3A8) et le compte IMSI2 associé au deuxième algorithme Algo2(A3A8).

De la même façon, dans notre exemple, la base HLR stocke le couple MSISDN/IMSI1 associé au premier compte et le couple MSISDN/IMSI2 associé au deuxième compte.

Le procédé de mise à jour consiste à basculer le premier compte IMSI1 vers le deuxième IMSI2 dans la carte à puce, et le cas échéant dans le serveur SERV. Dans l'exemple de réalisation, le serveur SERV est équipé d'une fonctionnalité permettant de stocker deux comptes par abonné.

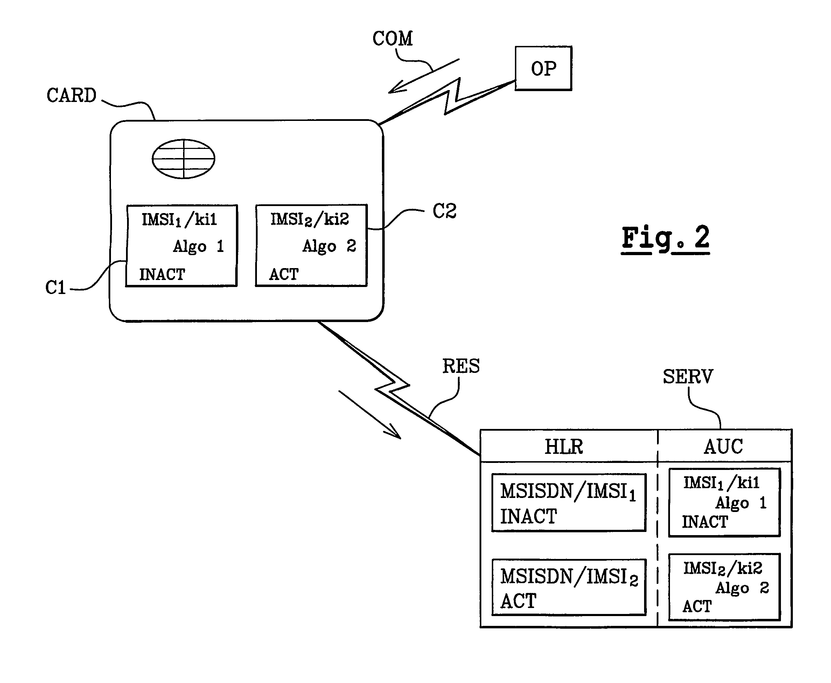

Pour cela, avant le basculement, le compte IMSI1 est actif, alors que le compte IMSI2 est inactif. La figure 1 est une vue du système avant le basculement des comptes. La figure 2 est une vue du système après le basculement.

Dans notre exemple de réalisation, les étapes de basculement des comptes sont les suivantes :

### Etape 1

L'opérateur lance une commande propre à effectuer un basculement de compte. Avantageusement cette commande est une commande OTA (Over The Air) propre à activer un drapeau sur la carte, l'activation ayant un effet de basculement d'un compte vers un autre compte.

Un drapeau peut tout simplement être mis en oeuvre par l'intermédiaire d'un bit. Par exemple, un bit à l'état 0 signifie que le compte IMSI1 est inactif et que le compte IMSI2 est actif. A l'inverse, un bit à l'état 1 signifie que le compte IMSI1 est actif et que le compte IMSI2 est inactif.

### Etape 2

La carte CARD reçoit la commande et effectue un basculement de compte, du compte IMSI1 vers le compte IMSI2. A cet instant, dans la carte, le premier compte IMSI1 bascule de l'état actif vers l'état inactif IMSI2 et le second compte bascule de l'état inactif vers l'état actif.

### Etape 3

Dans notre exemple, de façon à synchroniser le changement d'état des comptes stockés dans la carte avec ceux stockés dans le serveur SERV, le téléphone incluant la carte émet une commande d'authentification en direction du serveur pour que celui-ci effectue un basculement des comptes. Cette commande d'authentification inclus le nouveau code IMSI2. Dans le serveur, le compte actif est le compte IMSI1. Lorsque le serveur reçoit la commande d'authentification, un programme est apte à identifier le nouveau code IMSI2. Le serveur SERV réalise alors un basculement d'algorithme de façon à assurer une synchronisation de la mise à jour dés algorithmes d'authentification avec la carte CARD.

Dans le serveur, tous les couples (MSISDN/IMSI1 et IMSI1/Ki1) associés au premier algorithme Algo1(A3A8) deviennent inactifs, alors que tous les couples (MSISDN/IMSI2 et IMSI2/Ki2) associés au nouvel algorithme Algo2(A3A8) deviennent actifs. Tout comme sur la carte, le basculement peut être réalisé en activant un drapeau.

### Etape 4

A ce stade du procédé, les deux comptes IMSI1 et IMSI2 ont basculé à la fois dans la carte CARD et dans le serveur SERV ; l'algorithme d'authentification utilisé pour l'authentification à la fois dans la carte CARD et dans le serveur SERV est désormais le nouvel algorithme Algo2(A3AB).

Les étapes décrites précédemment correspondent à un exemple de réalisation particulier non limitatif. L'étape 3 pourrait être mise en oeuvre différemment :
- Par exemple, il n'est pas nécessaire de créer deux comptes IMSI1 et IMSI2. La carte peut stocker un unique compte et deux algorithmes d'authentification Algo1 et Algo2. L'opérateur peut tout simplement émettre simultanément une commande vers la carte et vers le serveur pour réaliser un basculement du premier algorithme Algo1 vers le deuxième algorithme Algo2 dans la carte et sur le serveur; Avantageusement, on peut prévoir des clés Ki différentes pour chaque algorithme Algo1 et Algo2.

- Ou, l'opérateur peut émettre une commande uniquement vers le serveur. Sur la carte, le compte actif est toujours le compte IMSI1. Ultérieurement, lorsque le téléphone incluant la carte cherche à s'authentifier auprès du serveur SERV, celui-ci reçoit le code IMSI1 associé au premier algorithme Algo1 et s'aperçoit que le compte actuellement utilisé sur la carte n'est pas le compte IMSI2. Le serveur lance donc une commande propre à réaliser un basculement des comptes sur la carte. Une fois le basculement effectué, on peut prévoir que le téléphone incluant la carte émette vers le serveur un message informant que le basculement est bien effectué. A réception de ce message, les comptes basculent du compte IMSI1 vers le compte IMSI2 sur le serveur. Après basculement des comptes sur le serveur SERV, le serveur demande alors à la carte de s'authentifier avec le nouvel algorithme Algo2 associé au nouveau compte IMSI2.
- Ou, l'opérateur chargé du basculement peut télécharger dans la carte, et éventuellement dans le serveur, un programme apte à se déclencher à retardement par exemple en fonction d'une date définie et dont la fonction est de réaliser un basculement d'un compte vers un autre compte.
- Ou l'opérateur peut aussi déléguer l'opération de basculement à un ou plusieurs agents intelligents aptes à réaliser le basculement des comptes. Par exemple, on pourrait attribuer à chaque agent un ensemble de cartes. Dans cet exemple, l'opérateur transmet une commande à tout ou partie des agents pour qu'ils émettent en direction de la carte une commande COM ayant les mêmes caractéristiques que décrit précédemment.
- Le basculement des comptes sur le serveur peut être réalisé différemment. La carte s'authentifie auprès du serveur en utilisant le nouveau code IMSI2 associé au nouvel algorithme Algo2. Cependant l'algorithme Algo2 utilisé sur la carte n'est pas le même que l'algorithme actif sur le serveur SERV. En conséquence, l'authentification échoue ; cet échec peut servir de déclencheur au basculement des algorithmes sur le serveur.

Dans l'étape 3, le basculement peut ne pas être réalisé instantanément. Lorsque le drapeau est activé, on peut prévoir que le basculement effectif d'un compte vers un autre ne sera réalisé qu'après la réalisation d'un événement tel que la réinitialisation (Arrêt/Marche) de la carte, ou lors de l'exécution de la commande de rafraîchissement REFRESH en utilisant par exemple un mode parmi
- Reset,
- Full File Change Notification
- ou File Change Notification si la carte contient un fichier EF(IMSI) incluant le nouveau code IMSI.

Pour plus de détails sur ces modes, on se reportera aux textes des spécifications ETSI TS 11.14, TS 31.111 et TS 102 223 connus de l'homme du métier.

A noter que la mise à jour d'un algorithme d'authentification entraîne une modification des couples IMSI/KI et MSISDN/IMSI. Une modification ne nécessite pas toujours de modifier les deux éléments constituant un couple. Une modification peut ne concerner qu'un seul élément. Par exemple, une modification d'un algorithme peut ne concerner que l'élément IMSI du couple IMSI/Ki.

D'une manière générale, l'invention se rapporte à un procédé comprenant les étapes suivantes :
- Une étape préalable de stockage, dans une mémoire du dispositif, d'un deuxième algorithme d'authentification (Algo2) inactif,
- Une étape de basculement du premier algorithme (Algo1) vers le deuxième algorithme (Algo2), propre à inhiber le premier algorithme (Algo1) et à activer le second (Algo2).

Avantageusement, l'étape de basculement est réalisée sur l'initiative d'une entité extérieure (OP) audit dispositif, Dans notre exemple de réalisation, cette entité est un opérateur OP. Dans notre exemple, l'opérateur est maître de l'opération de basculement.

Dans notre exemple, l'opérateur qui émet la commande de basculement est un opérateur qui gère un compte actif sur la carte. Cependant, on peut prévoir qu'il existe des arrangements particuliers entre opérateurs s'autorisant mutuellement à effectuer des basculements de comptes sur la carte ; dans ce contexte, on peut prévoir que l'opérateur qui émet la commande de basculement soit l'opérateur d'un compte inactif sur la carte. Plus généralement, l'étape de basculement est initiée, de préférence, par toute personne/entité autorisée à le faire.

De préférence, l'étape de stockage des algorithmes est réalisée dans un endroit sûr, par exemple lors de la personnalisation de carte.

Le mode de basculement peut être mis en oeuvre différemment. Par exemple, on a vu que l'opérateur chargé du basculement peut télécharger dans le dispositif un programme apte à se déclencher à retardement. Ainsi, le basculement peut être réalisé en même temps sur la carte, et sur tout dispositif concerné par une mise à jour de l'algorithme d'authentification.

On a vu que la synchronisation de la mise à jour des algorithmes d'authentification sur la carte et le serveur peut être réalisé de différentes façons. Avantageusement, on stocke un deuxième compte C2 incluant un code IMSI2, différent du code IMSI1, associé à l'algorithme Algo2. Après l'étape de basculement des comptes sur le dispositif en question, ce dernier transmet le code IMSI2 vers tout ou partie des dispositifs de traitement de données nécessitant un basculement d'algorithmes. Ce code IMSI2 a pour fonction notamment d'informer les dispositifs de traitement de données nécessitant un basculement d'algorithmes qu'un basculement a eu lieu. Ceci assure une synchronisation de la mise à jour des algorithmes dans le système informatique. A réception du code (IMSI2) associé au deuxième algorithme (Algo2), ledit dispositif récepteur réalise un basculement d'algorithme du premier algorithme (Algo1) vers le second algorithme (Algo2).

La synchronisation peut être réalisée différemment. On a vu aussi dans notre exemple, qu'après basculement, ledit dispositif peut transmettre tout simplement une commande vers un autre dispositif de traitement de données nécessitant un basculement de comptes.

Avantageusement, à l'issue du basculement, l'espace mémoire stockant les données associées au compte désactivé est réutilisé. Par exemple, à l'issue du basculement, les données associées au compte désactivé sont effacées de la mémoire. Cet effacement libère ainsi de l'espace mémoire.

On a vu aussi dans ce qui précède que, lors de la première étape, les deux comptes IMSI1 et IMSI2 créés dans la carte appartiennent au même abonné A1. A noter qu'un abonné peut rassembler un groupe d'utilisateurs utilisant le même compte.

On a vu aussi, dans notre exemple de réalisation, que le basculement consiste à désactiver dans un premier temps le premier compte IMSI1 et à activer dans un second temps le second compte IMSI2.

Il en résulte un dispositif de traitement de données, en particulier une carte à puce, caractérisé en ce qu'il comprend :
- des moyens de mémoire stockant un deuxième algorithme d'authentification (Algo2),,
- et en ce qu'il comprend un microcontrôleur programmé pour réaliser, sur l'initiative d'un opérateur (OP), une étape de basculement du premier algorithme (Algo1) vers le deuxième algorithme (Algo2).

L'invention concerne aussi un programme d'ordinateur pour un dispositif de traitement de données, comprenant des instructions de code pour l'exécution de l'étape de basculement définie précédemment.

Enfin, l'invention concerne un programme d'ordinateur pour un dispositif de traitement de données, comprenant des instructions de codes pour, après l'étape de basculement du premier algorithme vers le second, identifier l'algorithme utilisé par un dispositif émetteur avec le code (IMSI2)reçu dudit dispositif émetteur.

On s'aperçoit que l'invention offre de nombreux avantages :

Le coût en temps d'une telle mise en oeuvre est largement réduit. En effet, la carte est vendue avec les deux algorithmes. Un premier algorithme pour une utilisation courante ; et un second algorithme pour une utilisation future. L'opérateur choisi lui-même le moment souhaité pour réaliser la migration. Une simple commande permet d'effectuer le basculement sur un nombre choisi de cartes à puce. L'opérateur a donc la possibilité s'il le souhaite de réaliser une migration à l'unité c'est-à-dire carte par carte.

On a vu aussi qu'une fois le basculement effectué et que le nouvel algorithme Algo2 est actif, le compte associé à l'ancien algorithme Algo1 peut être effacé libérant ainsi de l'espace mémoire. Cette libération d'espace mémoire, en particulier dans la carte à puce, est un gros avantage vu les contraintes matérielles extrêmes en terme de mémoire.

L'invention permet de ne pas remplacer toutes les cartes actuellement utilisées par de nouvelles cartes stockant la nouvelle version de l'algorithme d'authentification ;

L'invention permet d'éviter l'attribution d'un nouveau numéro de téléphone à chaque abonné dont le couple IMSI/Ki nécessite d'être stocké dans un nouveau centre d'authentification AuC ; L'utilisateur conserve alors la même carte, le même numéro de téléphone dans tous les cas de figure.

L'invention permet à l'opérateur d'éviter des dépenses financières considérables. On voit que l'invention est intéressante pour l'opérateur car celui-ci utilise un seul centre d'authentification pour mettre à jour les algorithmes d'authentification. L'opérateur n'est pas contraint d'acheter de nouveaux équipements pour effectuer la migration. Le coût en argent d'une telle mise en oeuvre est encore une fois largement réduit.

## Revendications

1. Procédé de mise à jour d'un algorithme d'authentification dans au moins un dispositif de traitement de données (CARD, SERV) apte à stocker dans une mémoire dudit dispositif (CARD, SERV) une identité d'abonné (IMSI1) associée à un algorithme d'authentification (Algo1), **caractérisé en ce qu'**il comprend les étapes suivantes :
- Une étape préalable de stockage, dans une mémoire du dispositif, d'un deuxième algorithme d'authentification (Algo2) inactif, associé à un deuxième code IMSI2, différent de l'identité d'abonné IMSI1
- Une étape de basculement du premier algorithme (Algo1) vers le deuxième algorithme (Algo2) propre à inhiber le premier algorithme (Algo1) et à activer le second (Algo2).

2. Procédé selon la revendication 1, **caractérisé en ce que** l'étape de basculement est réalisée sur l'initiative d'une entité extérieure (OP) audit dispositif.

3. Procédé selon la revendication 1 ou 2, **caractérisé en ce que**, pour réaliser l'opération de basculement, l'entité extérieure audit dispositif (OP) transmet une commande (COM) à distance vers ledit dispositif (CARD) pour réaliser le basculement du premier algorithme (Algo1) vers le second algorithme (Algo2).

4. Procédé selon la revendication 1 ou 2, **caractérisé en ce que** pour réaliser l'opération de basculement, l'entité extérieure audit dispositif télécharge dans le dispositif un programme apte à se déclencher à retardement, et dont la fonction est de réaliser un basculement du premier algorithme (Algo1) vers le second algorithme (Algo2).

5. Procédé selon la revendication 1, **caractérisé en ce que**, lors de l'étape préalable de stockage, on stocke un deuxième code IMSI2, différent du code IMSI1 et associé à l'algorithme Algo2, et **en ce qu'**après l'étape de basculement des comptes sur ledit dispositif (CARD), ledit dispositif transmet le code IMSI2 vers tout ou partie des dispositifs de traitement de données (SERV) nécessitant un basculement d'algorithmes, ledit code (IMSI2) associé au deuxième algorithme informant ces derniers du basculement d'algorithme de manière à assurer une synchronisation de la mise à jour des algorithmes.

6. Procédé selon la revendication 5, **caractérisé en ce qu'**à réception du code (IMSI2) associé au deuxième algorithme (Algo2), ledit dispositif récepteur réalise un basculement d'algorithme du premier algorithme (Algo1) vers le second algorithme (Algo2).

7. Procédé selon la revendication 1, **caractérisé en ce qu'**à l'issue du basculement, l'espace mémoire stockant les données associées au compte désactivé est réutilisé.

8. Dispositif de traitement de données, en particulier une carte à puce, apte à stocker une identité d'abonné (IMSI1) et associé à un algorithme d'authentification (Algo1), **caractérisé en ce qu'**il comprend :
- des moyens de mémoire stockant un deuxième algorithme d'authentification (Algo2), associé à un deuxième code IMSI2, différent de l'identité d'abonné IMSI1.
- et **en ce qu'**il comprend un microcontrôleur programmé pour réaliser, une étape de basculement du premier algorithme (Algo1) vers le deuxième algorithme (Algo2) propre à inhiber le premier algorithme (Algo1) et à activer le second (Algo2).

9. Programme d'ordinateur stocké dans un dispositif de traitement de données, comprenant des instructions de code pour l'exécution de l'étape de basculement définie dans la revendication 1 lorsqu'il est exécuté sur le dispositif de traitement de données.

10. Programme d'ordinateur stocké dans un dispositif de traitement de données, comprenant des instructions de codes pour, après l'étape de basculement du premier algorithme vers le second telle que définie dans la revendication 1, identifier l'algorithme utilisé par un dispositif émetteur avec le code (IMSI2), tel que défini dans la revendication 5, reçu dudit dispositif émetteur lorsqu'il est exécuté sur le dispositif de traitement de données.

## Claims

1. A method of updating an authentication algorithm in at least one data processing device (CARD, SERV) which can store in a memory element of the said device (CARD, SERV) a subscriber identity (IMSI1) which is associated with an authentication algorithm (Algol), **characterised in that** it comprises the following steps:
- A preliminary step whereby a second inactive authentication algorithm (Algo2) associated with a second code IMSI1, different from the subscriber identity IMSI1 is stored in a memory element of the device,
- A step for switching from the first algorithm (Algol) to the second algorithm (Algo2) which can inhibit the first algorithm (Algol) and activate the second one (Algo2).

2. A method according to claim 1, **characterised in that** the switching step is carried out on the initiative of an entity (OP) external to said device.

3. A method according to claim 1 or 2, **characterised in that** in order to perform the switching operation, the entity (OP) external to said device transmits a command (COM) remotely to the said device (CARD) in order to switch from the first algorithm (Algol) to the second algorithm (Algo2).

4. A method according to claim 1 or 2, **characterised in that** in order to perform the switching operation, the entity external to said device downloads into the device a program which can start up after a time delay and whose purpose is to switch from the first algorithm (Algol) to the second algorithm (Algo2).

5. A method according to claim 1, **characterised in that** during the preliminary storage step, a second code IMSI2, different from the code IMSI1 and associated with the algorithm Algo2, is stored, and **in that** after the step for switching accounts on said device (CARD), said device transmits the code IMSI2 to all or part of the data processing devices (SERV) whose algorithms need to be switched, said code (ISMI2) associated with a second algorithm informing these data processing devices that the algorithms have been switched in order to synchronise the algorithm update.

6. A method according to claim 5, **characterised in that** on the reception of the code (IMSI2) associated with the second algorithm (Algo2), said receiving device switches algorithm from the first algorithm (Algol) to the second algorithm (Algo2).

7. A method according to claim 1, **characterised in that** after switching, the memory space storing the data associated with the disabled account is reused.

8. A data processing device, in particular a smart card, which can store a subscriber identity (IMSI1) and which is associated with an authentication algorithm (Algol), **characterised in that** it comprises:
- memory means storing a second authentication algorithm (Algo2), associated with a second code IMSI 2, different from the subscriber identity IMSI1.
- and **in that** it comprises a microcontroller programmed to carry out a step for switching from the first algorithm (Algol) to the second algorithm (Algo2) which can inhibit the first algorithm (Algo1) and activate the second (Algo2).

9. A computer program stored in a data processing device, comprising code instructions for executing the switching defined in claim 1 when it is executed on the data processing device.

10. A computer program stored in a data processing device, comprising code instructions to, after the step for switching from the first algorithm to the second as defined in claim 1, identify the algorithm used by a transmitting device with the code (IMSI2), as defined in claim 5, received from said transmitting device when it is executed on the data processing device.

## Patentansprüche

1. Verfahren zur Aktualisierung eines Authentifizierungsalgorithmus in mindestens einer Datenverarbeitungsvorrichtung (CARD, SERV), das eine mit einem Authentifizierungsalgorithmus (Algo1) verbundene Teilnehmeridentität (IMSI1) in einem Speicher der genannten Vorrichtung (CARD, SERV) speichern kann, **dadurch gekennzeichnet, dass** es die folgenden Phasen umfasst:
- eine vorbereitende Phase der Speicherung eines zweiten, inaktiven Authentifizierungsalgorithmus (Algo2) in einem Speicher der Vorrichtung, der mit einem zweiten, sich von der Teilnehmeridentität IMSI1 unterscheidenden IMSI2-Code verbunden ist;
- eine Phase der Umschaltung vom ersten Algorithmus (Algol) auf den zweiten Algorithmus (Algo2), die der Blockierung des ersten Algorithmus (Algol) und der Aktivierung des zweiten Algorithmus (Algo2) dient.

2. Verfahren nach Anspruch 1, **dadurch gekennzeichnet, dass** die Umschaltphase auf Initiative einer der genannten Vorrichtung externen Einheit (OP) erfolgt.

3. Verfahren nach Anspruch 1 oder 2, **dadurch gekennzeichnet, dass** die der genannten Vorrichtung externe Einheit (OP) für die Ausführung des Umschaltvorgangs einen Fernbefehl (COM) an die genannte Vorrichtung (CARD) überträgt, um die Umschaltung vom ersten Algorithmus (Algo1) auf den zweiten Algorithmus (Algo2) auszuführen.

4. Verfahren nach Anspruch 1 oder 2, **dadurch gekennzeichnet, dass** die der genannten Vorrichtung externe Einheit für die Ausführung des Umschaltvorgangs ein Programm in die Vorrichtung lädt, dass sich mit Verzögerung auslösen kann und dessen Funktion die Ausführung einer Umschaltung vom ersten Algorithmus (Algo1) auf den zweiten Algorithmus (Algo2) ist.

5. Verfahren nach Anspruch 1, **dadurch gekennzeichnet, dass** während der vorbereitenden Speicherphase ein zweiter IMSI2-Code gespeichert wird, der sich vom IMSI1-Code unterscheidet und mit dem Algorithmus Algo2 verbunden ist, und dadurch, dass die genannte Vorrichtung nach der Phase der Umschaltung der Konten auf der genannten Vorrichtung (CARD) den IMSI2-Code an alle oder einen Teil der Datenverarbeitungsvorrichtungen (SERV) überträgt, deren Algorithmen umgeschaltet werden müssen, wobei der genannte, mit dem zweiten Algorithmus verbundene Code (IMSI2) diese Datenverarbeitungsvornchtungen über die Umschaltung der Algorithmen informiert, um eine Synchronisation der Algorithmusaktualisierung zu gewährleisten.

6. Verfahren nach Anspruch 5, **dadurch gekennzeichnet, dass** die genannte Empfangsvorrichtung bei Empfang des mit dem zweiten Algorithmus (Algo2) verbundenen Codes (IMSI2) eine Algorithmusumschaltung vom ersten Algorithmus (Algol) auf den zweiten Algorithmus (Algo2) ausführt.

7. Verfahren nach Anspruch 1, **dadurch gekennzeichnet, dass** nach Ende der Umschaltung der Speicherplatz, auf dem die mit dem deaktivierten Konto verbundenen Daten gespeichert sind, wiederverwendet wird.

8. Datenverarbeitungsvorrichtung, insbesondere eine Mikrochipkarte, die eine Teilnehmeridentität (IMSI1) speichern kann und mit einem Authentifizierungsalgorithmus (Algol) verbunden ist, **dadurch gekennzeichnet, dass** sie Folgendes enthält:
- Speichermittel, die einen zweiten Authentifizierungsalgorithmus (Algo2) speichern, der mit einem zweiten, sich von der Teilnehmeridentität IMSI1 unterscheidenden IMSI2-Code verbunden ist.
- einen Mikrokontroller, der programmiert wurde, eine Umschaltphase vom ersten Algorithmus (Algol) auf den zweiten Algorithmus (Algo2) auszuführen, die der Blockierung des ersten Algorithmus (Algol) und der Aktivierung des zweiten Algorithmus (Algo2) dient.

9. Computerprogramm, das in einer Datenverarbeitungsvorrichtung gespeichert ist und Codeanweisungen für die Ausführung der Umschaltphase enthält, die in Anspruch 1 definiert ist, wenn es auf der Datenverarbeitungsvorrichtung ausgeführt wird.

10. Computerprogramm, das in einer Datenverarbeitungsvorrichtung gespeichert ist und Codeanweisungen für die Identifizierung des durch eine Sendevorrichtung verwendeten Algorithmus mit dem von der genannten Sendevorrichtung erhaltenen und in Anspruch 5 definierten Code (IMSI2) nach der in Anspruch 1 definierten Umschaltphase vom ersten Algorithmus auf den zweiten Algorithmus enthält, falls es auf der Datenverarbeitungsvorrichtung ausgeführt wird.
